# EUROPÄISCHE PATENTSCHRIFT

(11) **EP 1 030 988 B1**
(45) Veröffentlichungstag und Bekanntmachung des Hinweises auf die Patenterteilung: **23.01.2002**
(21) Anmeldenummer: 98961138.9
(22) Anmeldetag: 05.11.1998
(51) Int. Cl.: F16K 1/44

(54) **DOPPELSITZVENTIL**
DOUBLE SEAT VALVE
SOUPAPE A SIEGE DOUBLE

(30) Priorität: 13.11.1997 DE 19750300
(43) Veröffentlichungstag der Anmeldung: 30.08.2000
(73) Patentinhaber: Alfa Laval LKM A/S, 6000 Kolding (DK)
(72) Erfinder: BORG, Sören, DK-8700 Horsens (DK)
(74) Vertreter: Kloiber, Thomas, Dr. Dipl.-Phys.
(86) Internationale Anmeldenummer: EP9807066
(87) Internationale Veröffentlichungsnummer: WO9926000

(56) Entgegenhaltungen:
- EP-A- 0 174 384
- EP-A- 0 545 846
- EP-A- 0 819 876
- DE-A- 4 236 464

## Beschreibung

Die Erfindung betrifft ein Doppelsitzventil mit Leckagesicherung, insbesondere für die Lebensmittel- und Getränkeindustrie, das in seinem Gehäuse zwei zusammenwirkende Ventilteller aufweist, die einen Leckagehohlraum begrenzen, der über Leitungen ins Freie mündet, wobei für das Betätigen beider Ventilteller ein gemeinsamer Antrieb vorgesehen ist, der einen Zylinder mit einem beidseitig von einer ersten und einer zweiten Druckfeder belasteten ersten Arbeitskolben enthält, welcher fest mit dem Ventilschaft des unteren Ventiltellers verbunden ist, wobei dieser Ventilschaft teleskopartig den oberen Ventilteller und dessen rohrförmigen Schaft durchsetzt, der Schaft seinerseits mit seinem oberen Ende in den Zylinder ragt und dort ein Widerlager trägt für die den oberen Ventilteller in seinen Sitz drückende, untere Druckfeder, sowie im Zylinder unter dem ersten Arbeitskolben ein zweiter, auf den rohrförmigen Schaft wirkender und auf dem rohrförmigen Schaft beweglicher, Arbeitskolben angeordnet ist und oberhalb des ersten Arbeitskolbens ein dritter Arbeitskolben angeordnet ist, der auf den unteren Ventilteller wirkt.

Ein gattungsgleiches Absperrventil ist aus der DE-A1 30 05 329 bekannt.

Die Sitzflächen beider Ventilteller sind konisch ausgebildet und so ausgerichtet, daß beide Ventilteller in gleiche Richtung in die Sitzfläche einfahren. Zwischen den Ventiltellern wird ein Leckageraum gebildet, der über eine Leitung gewöhnlich ins Freie mündet.

Desweiteren ist aus der DE 42 36 464 A1 ein Doppelsitzventil bekannt, bei dem zur Vermeidung, daß durch Druckstöße der untere Ventilteller angehoben wird und Medium in den Leckageraum übertritt, der untere Ventilteller nach unten in einen Ausgleichskolben fortgeführt ist, der ungefähr denselben Durchmesser aufweist wie der untere Ventilteller. Druckstöße in der Rohrleitung wirken somit mit gleicher Kraft auf den Ausgleichszylinder wie auch auf den Ventilteller, so daß sich die Druckkräfte in axialer Richtung ausgleichen.

Die bekannten Ventile können drei Funktionen ausüben. Zum Öffnen des Ventils werden beide Ventilteller angehoben, zum Reinigen der Ventilsitze können der untere bzw. der obere Ventilteller jeweils einzeln geringfügig aus ihren Sitzflächen bewegt werden, um die Sitzflächen zu reinigen.

Dazu sind für die Ventile Antriebseinheiten vorgesehen, die seriell angeordnete Zylinder aufweisen, in denen die erforderlichen Kolben angeordnet sind. Die Kolben wirken über zwei konzentrische Ventilschäfte auf die beiden Ventilteller.

Zum Öffnen wird ein erster Arbeitskolben durch Druckluft beaufschlagt, der über einen Ventilschaft mit dem unteren Ventilteller verbunden ist. Der erste Kolben wird unter Mitnahme des unteren Ventiltellers dabei gegen die Kraft einer ersten Feder nach oben bewegt, wobei diese Feder weiter vorgespannt wird, bis der untere Ventilteller gegen den oberen Ventilteller stößt. Der Leckageraum ist dann geschlossen. Beim weiteren Anheben bewegen sich beide Ventilteller gemeinsam nach oben, wodurch das Ventil geöffnet wird.

Im geöffneten Zustand drückt eine zweite Feder, die sich gegen Anschläge am Ventilschaft und am rohrförmigen Ventilschaft abstützt, die beiden Ventilteller zusammen.

Das Schließen des Ventils läuft in umgekehrter Reihenfolge ab, wobei der erste Arbeitskolben jedoch in drucklosem Zustand von der Kraft der ersten Feder bewegt wird. Sobald der obere Ventilteller seinen Sitz erreicht hat, trennen sich die beiden Ventilteller und der untere Ventilteller fährt in seinen Sitz. Dabei wird die zweite Feder weiter zusammengedrückt.

Zum Reinigen der Ventilsitze müssen die Ventilteller einzeln angehoben werden. Dazu ist ein zweiter und ein dritter Kolben vorgesehen. Diese Kolben wirken einzeln über die Ventilschäfte jeweils auf den unteren bzw. oberen Ventilteller.

Der zweite Kolben für den Reinigungshub des unteren Ventiltellers befindet sich in einem eigenen Zylinder oberhalb des Zylinders für den ersten Kolben. Der Ventilschaft für den unteren Ventilteller ist in diesen zweiten Zylinder geführt. Sobald er an seiner Unterseite mit Druckluft beaufschlagt wird, hebt er über einen geeigneten Anschlag den zugeordneten Ventilschaft und mit diesem den unteren Ventilteller aus seinem Sitz. Ein geeignetes Reinigungsmedium kann durch einen so entstandenen Ringspalt zwischen Ventilteller und Ventilsitz in die Leckagekammer eindringen.

Zum Reinigen des oberen Ventilsitzes wird der dritte Kolben, der sich zwischen erstem Kolben und unterer Gehäusewand im Zylinder angeordnet ist, von unten mit Druckluft beaufschlagt. Der Kolben wird dabei angehoben, bis er gegen ein an dem rohrförmigen Ventilschaft angeordnetes Widerlager anschlägt. Über den Ventilschaft wird dadurch auch der obere Ventilteller etwas aus seinem Sitz angehoben. Durch das eindringende Reinigungsmedium wird der zugeordneten Ventilsitz gespült.

Durch die Vielzahl der Schaltfunktionen gestaltet sich der Aufbau des Antriebs recht aufwendig.

Aufgabe der Erfindung ist es, ein Doppelsitz-Ventil der gattungsgemäßen Art mit einem fertigungstechnisch günstigen Antrieb anzugeben, das beim Schalten wenig Luft verbraucht, schnell auf Schaltbefehle reagiert und in allen denkbaren Betriebszuständen ein Vermischen von Medien sicher vermeidet.

Die Aufgabe wird dadurch gelöst, daß die erste Feder sich direkt am dritten Kolben abstützt. Auf diese Weise kann für die Reinigung des unteren Ventilsitzes auf einen speziellen Zylinder für den Kolben zum Anheben des unteren Ventiltellers verzichtet werden. Der Kolben ist statt dessen im gleichen Zylinder wie die übrigen Kolben angeordnet. Der Antrieb für das Ventil ist deshalb fertigungstechnisch günstiger gestaltet. Im Gegensatz zu den bisher verwendeten Antrieben für Doppelsitzventile benötigt das erfindungsgemäße Doppelsitzventil also keinen zusätzlichen Zylinder, um alle gewünschten Funktionen, nämlich Öffnen, Schließen sowie Reinigen der Ventilsitze zuverlässig durchführen zu können. Gleichzeitig ergibt sich eine vorteilhaft geringere Bauhöhe für den Zylinder.

Der Luftverbrauch beim Reinigungshub des unteren Ventiltellers vermindert sich vorteilhaft, wenn im Zylinder ein den Hub des dritten Kolbens begrenzender Anschlag vorgesehen ist.

Dadurch, daß die erste Feder eine von Anschlägen festgelegte Länge aufweist, kann auf einen Federkäfig vorteilhaft verzichtet werden.

Die Maßnahme, daß die erste Feder die Ventilteller unter Vorspannung beabstandet haltend angeordnet ist, sichert die Lage des zweiten radial dichtenden Ventiltellers in der zylindrischen Sitzfläche.

Setzungserscheinungen der oberen Dichtung können vorteilhaft kompensiert werden, weil der Abstand der Ventilteller einstellbar ausgebildet ist.

Wenn zwischen Antriebseinheit und Ventilgehäuse ein Zwischenraum vorgesehen ist, in dem auf der rohrförmigen Ventilstange ein, vorzugsweise einstellbarer, Anschlag zur Begrenzung des Weges des oberen Ventiltellers nach angeordnet ist, läßt sich die Größe des Hubes bequem von außen einstellen.

Die erfindungsgemäße Konstruktion des Antriebs läßt sich besonders vorteilhaft bei einem Ventil einsetzen, bei dem der untere Ventilteller mit einer radial wirkenden Dichtung versehen ist, die mit einer zylindrischen Sitzfläche des Ventilgehäuses zusammenwirkt.

In Kombination mit einem oberen Ventilteller, der mit einer konischen Sitzfläche des Ventilgehäuses zusammenwirkend ausgebildet ist, ergibt sich eine vorteilhaft präzise Zentrierung der Ventilteller im Dichtsitz.

In alternativer Ausführung kann auch der obere Ventilteller mit einer axialen Sitzfläche des Ventilgehäuses zusammenwirkend ausgebildet sein.

Wenn der obere Ventilteller eine zylindrische Ausnehmung zur dichtenden Aufnahme des unteren Ventiltellers aufweist, schaltet das Ventil vorteilhaft lekagefrei.

Dadurch, daß der obere Ventilteller eine Fläche aufweist, die mit einer Gegenfläche des Ventilgehäuses auf einer Teilstrecke des Hubes einen Drosselspalt ausbildend angeordnet ist, werden die Dichtungen beim Schalten geschont.

Druckschläge führen zu keiner Leckage, weil der untere Ventilteller eine hydraulische Ausgleichsfläche aufweist. Diese wird durch einen im Gehäuse geführten und mit dem unteren Ventilteller verbundenen Ausgleichskolben verwirklicht.

Wenn eine konzentrisch zum rohrförmigen Schaft durch das Ventilgehäuse geführte Leckageleitung vorgesehen ist, kann der Querschnitt der Leitung bis etwa zur Größe des Ventildurchtritts erweitert werden.

Wenn die konzentrische Leckageleitung in einem festen Gehäuse mündet, kann die Einbaulage des Ventils frei gewählt werden.

Die Größe des Reinigungshubes für den oberen Ventilteller ist begrenzt, weil oberhalb des zweiten Arbeitskolbens ein seinen Hub begrenzender Anschlag am Zylinder vorgesehen ist.

Dadurch, daß zwischen erstem und zeiten Arbeitskolben eine die minimale Länge der zweiten Feder begrenzender Abstandshalter vorgesehen ist, bleibt auch der maximale Abstand der Ventilteller begrenzt, insbesondere der Abstand der Ventilteller beim Reinigungshub auf ein sicheres Maß beschränkt.

Wenn auf dem Ventilschaft des unteren Ventiltellers ein, vorzugsweise einstellbarer, Anschlag für den oberen dritten Kolben vorgesehen ist, läßt sich der Ruheabstand der Ventilteller voneinander entsprechend wählen.

Dadurch, daß ein Anschlag für den Ventilschaft vorgesehen ist, der den Weg des Ventilschafts nach oben begrent, ist die Endlage im geöffneten Zustand fixiert.

Auf der rohrförmigen Ventilstange ist vorteilhafter Weise für die Mitnahme durch den zweiten Kolben ein Anschlag vorgesehen, gegen den der zweiten Arbeitskolben oben anschlägt, damit auch der obere Ventilsitz gereinigt werden kann.

Wenn mindestens einer der Ventilteller eine vorzugsweise in eine Durchtrittsöffnung des Ventilsitzes ragende Drosselkante aufweist, wird ein steiler Druckanstieg in der Leckagekammer während der Öffnungsbewegung der Ventilteller vorteilhaft vermieden. Durch die geringere Einströmgeschwindigkeit des Mediums in die Leckagekammer werden auch die Dichtungen an den Ventiltellern geringer belastet.

Ein sicheres Einfahren der Ventilteller in die Ventilsitze wird erreicht, wenn die Ventilteller vorzugsweise konisch und die Drosselkante als Endkante einer angeformten zylindrischen Fläche ausgebildet ist, deren Höhe vorzugsweise den Betrag eines Reinigungshubes übersteigt. Durch die zylindrischen Drosselkanten erfährt der Ventilteller beim Einfahren in den Ventilsitz zunächst eine Führung, durch die konische Form der Ventilteller zentrieren sich diese beim Einfahren selbsttätig. Ein Verklemmen der Ventilteller und der Ventilsitze wird dadurch nahezu ausgeschlossen. Zum Reinigen der Dichtfläche kann der Ventilteller um einen kleinen Betrag angehoben werden. Über den Weg dieses Reinigungshubes bleibt der dabei sich bildende Drosselspalt konstant, da die Höhe der angeformten zylindrischen Fläche den Betrag des Reinigungshubes übersteigt.

Ein Druckanstieg im Leckageraum während der Reinigung der Ventilsitze wird dadurch vermieden, daß ein von Drosselkante und Durchtrittsöffnung gebildeter Drosselspalt eine geringere Durchtrittsfläche aufweist als die Gesamtfläche der Leitungen, die vom Leckagehohlraum gewöhnlich ins Freie münden.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Dadurch, daß erster und dritter Kolben einen Arbeitsraum mit einem Druckluftanschluß bilden, und der erste Kolben auf den oberen Ventilteller wirkend angeordnet ist, kann beim Reinigungshub des unteren Ventiltellers auf den oberen Ventilteller ein zusätzlicher Druck ausgeübt werden. Dies ergibt zusätzliche Sicherheit gegen öffnen.

Die Figuren zeigen im einzelnen:
- Figur 1: schematisch einen Vertikalschnitt durch das erfindungsgemäße Doppelsitzventil in Ruhestellung und
- Figur 2: eine Variante des erfindungsgemäßen Doppelsitzventils mit geändertem Leckageabfluß.

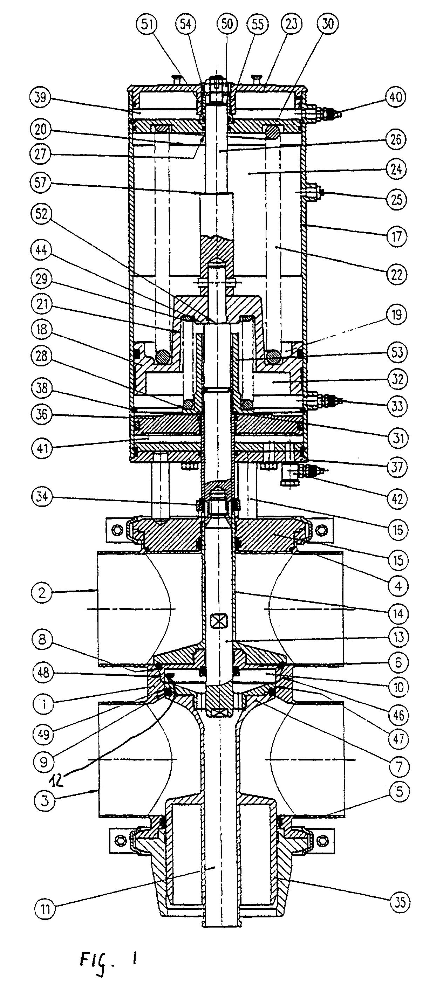

Gemäß Fig. 1 besteht das Doppelsitzventil aus einem ringförmigen leitungsverbindenden Gehäuseteil 1 mit Ventilsitzen 8 und 9. Der flüssigkeitsdichte Abschluß zwischen einem oberen Gehäuseteil 4 mit Leitungsanschlüssen 2 und dem unteren Gehäuseteil 5 mit Leitungsanschlüssen 3 erfolgt durch einen oberen Ventilteller 6 und einen unteren Ventilteller 7. In den Schließpositionen sitzen diese jeweils in dem oberen Ventilsitz 8 und dem unteren Ventilsitz 9. Zwischen den beiden Ventiltellern 6, 7 bildet sich in der dargestellten Schließposition ein Leckageraum 10. Im unteren Ventilteller 7 sind Bohrungen, die in eine Leitung 11 münden, vorgesehen, die zu einem Leckageausgang führen. Dringt ausnahmsweise oder beim Reinigen über Ventilsitz 8 oder 9 Flüssigkeit in den Leckageraum 10, wird diese durch die Leitung 11 ins Freie abgeführt.

Eine Vermischung der Flüssigkeiten, die sich im oberen Ventilgehäuse 4 und im unteren Ventilgehäuse 5 befinden, wird somit mit Sicherheit verhindert.

Der untere Ventilteller 7 ist fest mit einem Ventilschaft 13 verbunden, während der obere Ventilteller 6 fest mit einem rohrförmigen Ventilschaft 14 verbunden ist, der seinerseits auf dem Ventilschaft 13 axial teleskopartig verschiebbar gelagert ist. An einem oberen Ventildeckel 15, der das obere Gehäuseteil 4 verschließt, ist über Abstandselemente 16 ein Zylinder 17 angeschlossen.

Am axial bewegbaren Ventilschaft 13 ist ein erster Arbeitskolben 18 fest angebracht. Mit seiner äußeren Umfangsfläche schließt er dichtend mit der inneren Gehäusewandung des Zylinders 17 ab.

Der Kolben 18 weist eine ringförmig umlaufende Vertiefung 19 auf. In der Vertiefung 19 stützt sich eine erste vorgespannte Druckfeder 22 ab, die sich mit ihrem entgegengesetzten Ende an einem im Zylinder 17 angeordneten dritten Kolben 30 für den Reinigungshub des unteren Ventiltellers 7 abstützt.

Die erste Druckfeder 22 ist zwischen ersten Arbeitskolben 18 und drittem Arbeitskolben 30 eingespannt. Die aus der Vorspannung resultierenden Kräfte werden vom verlängerten Ventilschaft 13 aufgenommen. Der dritte Arbeitskolben 30 bildet dabei ein Widerlager, das sich über eine Hülse 51 an der Mutter 50 abstützt, die auf das obere Ende der Ventilstange 13 aufgeschraubt ist. Auf der anderen Seite bildet der erste Arbeitskolben 18 das Widerlager. Der erste Arbeitskolben stützt sich nämlich auf dem Bund 52 des Ventilschaftes 13 für den unteren Ventilteller ab. Die Vorspannkräfte der ersten Feder 22 werden deshalb als Zugkräfte von dem Ventilschaftabschnitt zwischen der Mutter 50 und dem Bund 52 aufgenommen.

Auf der gegenüberliegenden Seite der Vertiefung 19 weist der erste Arbeitskolben 18 einen topfförmigen Abschnitt 21 auf, in dem eine zweite Feder 29 aufgenommen ist. Diese vorgespannte zweite Druckfeder 29 stützt sich mit dem oberen Ende im Bereich des Abschnitts 21 am ersten Arbeitskolben 18 und mit dem anderen Ende an einer Schulter 28 einer Abstandshülse 53 ab, die sich ihrerseits auf einem auf dem rohrförmigen Ventilschaft 14 befestigten Federring 31 abstützt. Die Kraft der Feder 29 drückt über die Schulter 28 und den auf dem rohrförmigen Ventilschaft 14 befestigten Federring 31 den oberen Ventilteller 6 auf seinen Ventilsitz 8.

Gleichzeitig drückt die zweite Feder 29 den dritten Arbeitskolben 30 und mit ihm den Ventilschaft 13 so weit nach oben, bis der Arbeitskolben 30 in seiner oberen Endlage anschlägt. Diese obere Endlage wird durch die an der Hülse 51 angeformte Schulter 54 bestimmt, die an der Stirnfläche einer buchsenförmigen Ausstülpung 55 des oberen Zylinderdeckels 23 anliegt. Die Endlage ist durch die obere Mutter 50 einstellbar. Der untere Ventilteller 7 wird somit fest in einer axialen Position gehalten, die dem Ventilsitz 9 entspricht. Unterer und oberer Ventilteller erhalten in der Schließstellung somit einen gleichbleibenden Abstand, der mit der Mutter 50 einstellbar ist.

Das Ventil ist auf diese Weise drucklos geschlossen.

Der von Zylinder 17, vom oberen dritten Kolben 30 und dem ersten Arbeitskolben 18 gebildete Druckraum 24 kann über Anschluß 25 mit Druckluft beaufschlagt werden. Auf diese Weise kann der erste Arbeitskolben 18 zusätzlich zur Federkraft der Druckfedern 22 vorgespannt werden.

Oberhalb des ersten Arbeitskolben 18 ist der Ventilschaft 13 geteilt und in Form einer Verlängerung 26 durch eine Öffnung 27 des oberen Zylinderdeckels 23 geführt. Dadurch kann von außen sofort visuell der augenblickliche Schaltzustand des Ventils erkannt werden und von außen die Lage des unteren Ventiltellers eingestellt werden.

Unterhalb des ersten Arbeitskolbens 18 ist im Zylinder 17 ein zweiter Arbeitskolben 36 angeordnet. Der zweite Arbeitskolben 36 ist beweglich auf dem rohrförmigen Schaft 14 gelagert. In der in der Figur gezeigten Ruhestellung liegt er unterhalb des auf dem rohrförmigen Ventilschaftes 14 befestigten Federrings 31, der als Widerlager dient.

Erster und zweiter Arbeitskolben 18, 36 bilden einen zweiten Arbeitsraum 32, der über Anschluß 33 mit Druckluft beaufschlagt werden kann. Sein Hub wird von dem unteren Zylinderdeckel 37 und einem in den Zylinder Gehäusewand angeordneten Anschlag 38 begrenzt.

Zwischen dem dritten Arbeitskolben 30 und der oberen Zylinderdecke 23 ist ein dritter Druckraum 39 ausgebildet, der über Anschluß 40 mit Druckluft beaufschlagt werden kann.

Zwischen unterem Zylinderdeckel 37 und zweitem Arbeitskolben 36 befindet sich ein vierter Druckraum 41, der über Anschluß 42 mit Druckluft beaufschlagt werden kann.

Geöffnet wird das Ventil, indem Druckluft auf Anschluß 33 geschaltet wird. Durch die Druckerhöhung im zweiten Druckraum 32 wird zunächst der erste Arbeitskolben 18 mit dem Schaft 13 und dem daran befestigten unteren Ventilteller 7 nach oben bewegt, bis er in die zylindrischen Ausnehmung des oberen Ventiltellers 6 eingefahren ist, zur Anlage kommt und diesen mitnimmt, so daß sich das Ventil öffnet. Der zweite Arbeitskolben 36 liegt dabei am unteren Zylinderdeckel 37 an. Die zweite Druckfeder 29 hält die beiden Ventilteller mit ihrer Vorspannkraft in dichtender Anlage. Der Leckageraum 10 ist dann geschlossen. Während des Hubes wird die erste Feder 22 weiter zusammengedrückt, bis der Arischlag 34 auf dem äußeren Ventilschaft 14 gegen den unteren Zylinderdeckel 37 stößt, und dadurch den Hub des Ventils nach oben begrenzt. In alternativer Ausführung kann bei entsprechender konstruktiver Gestaltung auch Anschlag 57 den Hub begrenzen.

Der Schließvorgang läuft in umgekehrter Reihenfolge ab. Über Anschluß 33 wird der zweite Arbeitsraum 32 entlüftet. Darauf senkt sich der erste Arbeitskolben 18 ab, bis der obere Ventilteller 6 über den rohrförmigen Ventilschaft 14 von der ersten Feder 22 und zweiten Feder 29 in den oberen Ventilsitz 8 gedrückt wird. Der untere Ventilteller 7 bewegt sich unter dem Druck der ersten Feder 22 weiter nach unten, bis die auf dem Ventilschaft 13 oben angeordnete Hülse gegen den dritten Arbeitskolben 30 anschlägt. Der untere Ventilteller 7 hat dann seinen unteren Ventilsitz 9 erreicht und wird in dieser Position gehalten. Beim Schließen bildet sich somit wieder der Abstand zwischen dem oberen Ventilteller 6 und dem unteren Ventilteller 7, so daß der Leckageraum 10 wieder zwischen den beiden Ventiltellern 6, 7 entsteht.

Oberer und unterer Ventilteller weisen jeweils Drosselkanten 46, 47 auf, der Durchmesser der von den Drosselkanten 46, 47 gebildeten Fläche ist dabei geringer als der Durchmesser der Durchtrittsöffnungen 48, 49. Die Durchmesser sind dabei so gewählt, daß die Fläche des von Drosselkanten 46, 47 und Durchtrittsöffnungen 48, 49 gebildeten ringförmigen Drosselspalts geringer ist als die Fläche der Bohrungen, die in Leitung 11 führen.

Zur Reinigung des unteren Ventilsitzes 9 kann der untere Ventilteller einzeln abgesenkt werden. Dabei wird an Anschluß 40 Druckluft angelegt. Der Druck im ditten Druckraum 39 erhöht sich. Da der dritte Arbeitskolben 30 auf der ersten Feder 22 aufliegt, wird durch den Druck der vorgespannten Feder 22 der erste Arbeitskolben 18 mit dem Ventilschaft 13 und dem daran befestigten unteren Ventilteller 7 nach unten getrieben, bis seine Stützfläche 44 auf der Abstandshülse 53 zur Anlage kommt und mit ihr über Federring 31 und rohrförmigen Ventilschaft 14 sich auf dem oberen Ventilteller 6 abstützt, so daß er sich nicht mehr weiter bewegen kann.

Durch den in dieser Lage gebildeten ringförmigen Drosselspalt zwischen Ventilteller 7 und Ventilsitz 9 kann Reinigungsmedium aus dem unteren Gehäuseteil 5 in den Leckageraum 10 eindringen, wodurch eine Reinigung des Ventilsitzes und des Leckageraumes erfolgt. Über die Bohrungen und Leitung 11 wird das Medium dann nach Außen abgeführt. Da die Fläche des ringförmigen Drosselspalts geringer ist als die Fläche der Bohrungen, erfolgt während der Reinigung kein Druckanstieg im Leckageraum 10 durch das Eindringen des Reinigungsmediums.

Bei Blockierung der Bohrungen 11, beispielsweise durch Fremdkörper, erfolgt ein Druckanstieg im Leckageraum 10 durch das eindringende Medium. Auf den oberen Ventilteller 6 wirkt dann eine erhöhte Kraft in Öffnungsrichtung des Ventils. Da die beiden Ventilteller sich gegenseitig über ihre zugeordneten Ventilschäfte und der Abstandshülse 53 abstützen, können keine in Öffnungsrichtung wirkenden Reaktionskräfte entstehen. Der untere Ventilteller übt nämlich eine gleichgroße aber entgegengesetzt gerichtete Kraft auf den oberen Ventilteller aus, so daß ein Übertritt von Reinigungsmedium beim Reinigungshub des unteren Sitzes mit Sicherheit ausgeschlossen ist.

Da erster Arbeitskolben 18 und dritter Arbeitskolben 30 bei Druckbeaufschlagung des dritten Arbeitsraumes 39 quasi eine starre Einheit bilden, wird der obere Ventilteller mit der Kraft der Druckfeder 22 in seinen Ventilsitz 8 gepreßt. Der Anpreßdruck des oberen Ventiltellers 6 kann noch erhöht werden, indem zusätzlich über Anschluß 25 der erste Druckraum 24 mit Druck beaufschlagt wird. Dazu wird der vom ersten 18 und dritten Arbeitskolben 27 begrenzte Druckraum 24 mit Druckluft beaufschlagt. Der erste Arbeitskolben 18 stützt sich dann über Abstandshülse 53 und Federring 31 auf der äußeren Ventilstange 14 ab, die dem oberen Ventilteller 6 in seinen Sitz preßt.

Durch Entlüften des Druckraums 39 wird der Reinigungshub für den unteren Ventilsitz wieder aufgehoben.

Der Hub zur Reinigung des oberen Ventiltellers 6 wird durch Anlegen von Druckluft an Anschluß 42 eingeleitet. Durch den erhöhten Druck im vierten Druckraum 41 wird der zweite Arbeitskolben 36 nach oben getrieben, bis er am Federring 31 anliegt. Daraufhin wird mit dem Federring 31 der rohrförmige Schaft 14 angehoben, bis der zweite Arbeitskolben 36 gegen Anschlag 38 stößt. Dadurch wird der obere Ventilteller 6 geringfügig aus seinem Ventilsitz 8 angehoben. Durch den Drosselspalt zwischen dem Ventilsitz 8 und Ventilteller 6 kann nun Reinigungsmedium aus dem oberen Gehäuseteil 4 in den Leckageraum 10 eindringen, wodurch eine Reinigung des oberen Ventilsitzes erfolgt.

Auch in dieser Situation kann bei einer Druckerhöhung im Leckageraum 10 kein Reinigungsmedium in den unterem Ventilraum übertreten. Bei einer Druckerhöhung kann der untere Ventilteller nach unten ausweichen bis der erste Arbeitskolben der über Ventilschaft 13 mitgenommen wird, gegen die obere Stirnfläche der Abstandshülse 53 anschlägt. Die Ventilteller können sich nicht weiter entfernen.

Zum Absenken wird der Druckraum 41 entlastet, wobei der zweite Arbeitskolben 36 durch die zweite Feder 29 abgesenkt wird und der Ventilteller 6 über den rohrförmigen Schaft 14 wieder in seinen Ventilsitz 8 gedrückt wird.

Die Funktionsweise ist in der folgenden Tabelle zusammengefaßt:

| | | | | |
|---|---|---|---|---|
| Anschluß | 42 | 33 | 40 | 25 |
| Öffnen | 0 | L | 0 | 0 |
| Schließen | 0 | 0 | 0 | 0 (L) |
| Sitzreinigung oben | L | 0 | 0 | 0 |
| Sitzreinigung unten | 0 | 0 | L | 0 (L) |

Bedeutung:
L: mit Druck beaufschlagt
0: drucklos

Auch im geschlossenen Zustand ist das Ventil unempfindlich gegen Druckschläge im Leitungssystem. Druckschläge im oberen Ventilteil drücken den oberen Ventilteller nur fester in seinen Sitz, so daß dadurch keine unerwünschte Leckage eintreten kann.

Druckschläge im unteren Ventilteil werden durch eine an den Ventilschaft 13 angeformte und durch das untere Gehäuse durchgeführte hydraulische Ausgleichsfläche in Form eines Ausgleichskolbens 35 kompensiert, da die hydraulische Ausgleichsfläche der des unteren Ventiltellers entspricht.

Auf diese Weise ist ein Ventil verwirklicht, das ohne zusätzlichen Schaltungsaufwand bei vorteilhaft verringerter Zahl an mechanischen Komponenten auch im Reinigungsbetrieb sicher das Mischen von Medien durch Formschluß der Ventilteller vermeidet. Es verbraucht zum Schalten wenig Luft und reagiert deshalb auf Schaltbefehle vorteilhaft schnell.

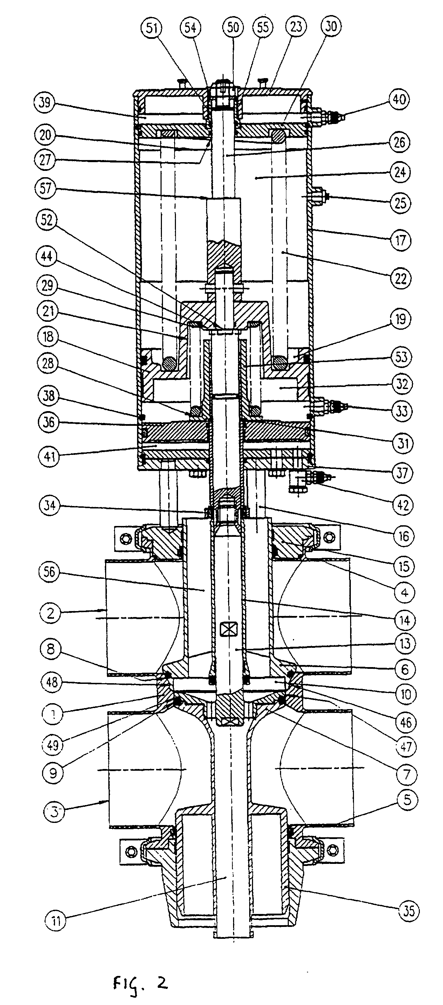

In Figur 2 ist eine Variante des Ventils gemäß obiger Beschreibung gezeigt, bei der die aus dem Leckageraum 10 ins Freie führende Leitung nach oben geführt ist. Diese Leitung 56 kann den Durchmesser des Ventilsitzes annehmen und/oder in einem Gehäuse mit festem Anschluß münden, wobei auf die untere Leitung 11 auch ganz verzichtet werden kann. Wenn die Leitung 56 in einem (nicht gezeichneten) ortsfesten Gehäuse mündet, kann das Ventil auch in einer gegenüber der gezeigten Darstellung um 180° gedrehten Lage eingebaut werden.

### Bezugszeichenliste

- 1: Gehäuseteil 1
- 2: Leitungsanschluß
- 3: Leitungsanschluß
- 4: oberes Gehäuseteil
- 5: unteres Gehäuseteil
- 6: oberer Ventilteller
- 7: unterer Ventilteller
- 8: oberer Ventilsitz
- 9: unterer Ventilsitz
- 10: Leckageraum
- 11: Leitung
- 12: zylindrische Ausnehmung
- 13: Ventilschaft (innerer)
- 14: rohrförmiger Ventilschaft
- 15: oberer Ventildeckel
- 16: Abstandselemente
- 17: Zylinder
- 18: erster Arbeitskolben
- 19: Vertiefung
- 20: Anschlag
- 21: topfförmiger Abschnitt
- 22: Druckfeder (erste)
- 23: oberer Zylinderdeckel
- 24: erster Druckraum
- 25: Druckluftanschluß
- 26: Verlängerung
- 27: Öffnung
- 28: Schulter
- 29: Druckfeder (zweite) (untere)
- 30: dritter Arbeitskolben
- 31: Federring
- 32: zweiter Druckraum
- 33: Anschluß
- 34: Anschlag (einstellbar)
- 35: Ausgleichskolben
- 36: zweiter Arbeitskolben
- 37: unterer Zylinderdeckel
- 38: Anschlag
- 39: dritter Druckraum
- 40: Anschluß
- 41: vierter Druckraum
- 42: Anschluß
- 43 44: Stützfläche
- 45 46: Drosselkante
- 47: Drosselkante
- 48: Durchtrittsöffnung
- 49: Durchtrittsöffnung
- 50: Mutter
- 51: Hülse
- 52: Bund
- 53: Abstandshülse
- 54: Schulter
- 55: Ausstülpung
- 56: Leitung
- 57: Anschlag

## Patentansprüche

1. Doppelsitzventil mit Leckagesicherung, insbesondere für die Lebensmittel- und Getränkeindustrie, das in seinem Gehäuse zwei zusammenwirkende Ventilteller (6,7) aufweist, die einen Leckagehohlraum (10) begrenzen, der über Leitungen (11) ins Freie mündet, wobei für das Betätigen beider Ventilteller (6,7) ein gemeinsamer Antrieb vorgesehen ist, der einen Zylinder (17) mit einem beidseitig von einer ersten und einer zweiten Druckfeder (29,22) belasteten ersten Arbeitskolben (18) enthält, welcher fest mit dem Ventilschaft (13) des unteren Ventiltellers (7) verbunden ist, wobei dieser Ventilschaft (13) teleskopartig den oberen Ventilteller (6) und dessen rohrförmigen Schaft (14) durchsetzt, der Schaft seinerseits mit seinem oberen Ende in den Zylinder (17) ragt und dort ein Widerlager (28) trägt für die den oberen Ventilteller (6) in seinen Sitz (8) drückende, untere Druckfeder (29), sowie im Zylinder (17) unter dem ersten Arbeitskolben (18) ein zweiter, auf den rohrförmigen Schaft wirkender und auf dem rohrförmigen Schaft beweglicher, Arbeitskolben (36) angeordnet ist und oberhalb des ersten Arbeitskolbens ein dritter Arbeitskolben (30) angeordnet ist, der auf den unteren Ventilteller wirkt, **dadurch gekennzeichnet, daß** die erste Feder (22) sich direkt am dritten Kolben (30) abstützt.

2. Doppelsitzventil nach Anspruch 1, **dadurch gekennzeichnet, daß** im Zylinder (17) ein den Hub des dritten Kolbens (30) begrenzender Anschlag (20) vorgesehen ist.

3. Doppelsitzventil nach Anspruch 1 oder 2, **dadurch gekennzeichnet, daß** die erste Feder (22) eine von Anschlägen (52, 50) festgelegte Länge aufweist.

4. Doppelsitzventil nach Anspruch 1, 2 oder 3, **dadurch gekennzeichnet, daß** die erste Feder (22) die Ventilteller (6, 7) unter Vorspannung beabstandet haltend angeordnet ist.

5. Doppelsitzventil nach Anspruch 1, 2, 3 oder 4, **dadurch gekennzeichnet, daß** der Abstand der Ventilteller (6, 7) einstellbar ausgebildet ist.

6. Doppelsitzventil nach Anspruch 1, 2, 3, 4 oder 5, **dadurch gekennzeichnet, daß** zwischen Antriebseinheit und Ventilgehäuse (2) ein Zwischenraum vorgesehen ist, in dem auf dem rohrförmigen Schaft (14) ein, vorzugsweise einstellbarer, Anschlag (34) angeordnet ist zur Begrenzung des Weges des oberen Ventiltellers nach oben.

7. Doppelsitzventil nach Anspruch 1, 2, 3, 4, 5, oder 6, **dadurch gekennzeichnet, daß** der untere Ventilteller (7) mit einer radial wirkenden Dichtung versehen ist, die mit einer zylindrischen Sitzfläche (9) des Ventilgehäuses (1) zusammenwirkt.

8. Doppelsitzventil nach einem oder mehreren der vorhergehenden Ansprüche, **dadurch gekennzeichnet, daß** der obere Ventilteller (6) mit einer konischen Sitzfläche (8) des Ventilgehäuses (1) zusammenwirkend ausgebildet ist.

9. Doppelsitzventil nach einem oder mehreren der vorhergehenden Ansprüche, **dadurch gekennzeichnet, daß** der obere Ventilteller (6) mit einer axialen Sitzfläche des Ventilgehäuses (1) zusammenwirkend ausgebildet ist.

10. Doppelsitzventil nach einem oder mehreren der vorhergehenden Ansprüche, **dadurch gekennzeichnet, daß** der obere Ventilteller (6) eine zylindrische Ausnehmung (12) zur dichtenden Aufnahme des unteren Ventiltellers (7) aufweist.

11. Doppelsitzventil nach einem oder mehreren der vorhergehenden Ansprüche, **dadurch gekennzeichnet, daß** der obere Ventilteller (6) eine Fläche aufweist, die mit einer Gegenfläche des Ventilgehäuses auf einer Teilstrecke des Hubes einen Drosselspalt ausbildend angeordnet ist.

12. Doppelsitzventil nach einem oder mehreren der vorhergehenden Ansprüche, **dadurch gekennzeichnet, daß** der untere Ventilteller eine hydraulische Ausgleichsfläche (35) aufweist.

13. Doppelsitzventil nach einem oder mehreren der vorhergehenden Ansprüche, **dadurch gekennzeichnet, daß** eine konzentrisch zum rohrförmigen Schaft (14) durch das Ventilgehäuse geführte Leckageleitung (56) vorgesehen ist.

14. Doppelsitzventil nach Anspruch 13, **dadurch gekennzeichnet, daß** die konzentrische Leckageleitung (56) in einem Gehäuse mündet.

15. Doppelsitzventil nach einem oder mehreren der vorhergehenden Ansprüche, **dadurch gekennzeichnet, daß** oberhalb des zweiten Arbeitskolbens (36) ein seinen Hub begrenzender Anschlag (38) am Zylinder (17) vorgesehen ist.

16. Doppelsitzventil nach einem oder mehreren der vorhergehenden Ansprüche, **dadurch gekennzeichnet, daß** zwischen erstem (18) und zweiten Arbeitskolben (36) eine die minimale Länge der zweiten Feder begrenzender Abstandshalter (53) vorgesehen ist.

17. Doppelsitzventil nach einem oder mehreren der vorhergehenden Ansprüche, **dadurch gekennzeichnet, daß** auf dem Ventilschaft (13) des unteren Ventiltellers (7) ein, vorzugsweise einstellbarer, Anschlag (50, 51, 54) für den oberen dritten Kolben (30) vorgesehen ist.

18. Doppelsitzventil nach einem oder mehreren der vorhergehenden Ansprüche, **dadurch gekennzeichnet, daß** ein Anschlag (57) für den Ventilschaft (13) vorgesehen ist, der den Weg des Ventilschafts (13) nach oben begrent.

19. Doppelsitzventil nach einem oder mehreren der vorhergehenden Ansprüche, **dadurch gekennzeichnet, daß** auf der rohrförmigen Ventilstange (14) für die Mitnahme durch den zweiten Kolben (36) ein Anschlag (31) vorgesehen ist, gegen den der zweiten Arbeitskolben (36) oben anschlägt.

20. Doppelsitzventil nach einem oder mehreren der vorhergehenden Ansprüche, **dadurch gekennzeichnet, daß** erster (18) und dritter Kolben (27) einen Arbeitsraum (24) mit einem Druckluftanschluß (25) bilden, und der erste Kolben (18) auf den oberen Ventilteller (6) wirkend angeordnet ist.

## Claims

1. A double seat valve with leak protection, more particularly for the food and drink industry, which in its housing comprises two cooperating valve disks (6, 7), which define a leakage cavity (10), which opens out into the open via lines (11), a common drive being provided for the actuation of both valve disks (6, 7), which comprises a cylinder (17) with a first working piston (18), which is loaded at both ends by a first and a second compression spring (29, 22) and is fixedly connected to the valve shaft (13) of the lower valve disk (7), the said valve shaft (13) telescopically penetrating the upper valve disk (6) and the tubular shaft (14) thereof, the shaft in turn projecting with its upper end into the cylinder (17) where it supports an abutment (28) for the lower compression spring (29) forcing the upper valve disk (6) into its seat, and a second working piston (36), which acts upon the tubular shaft and is displaceable on the tubular shaft, being arranged in the cylinder (17) below the first working piston (18), and a third working piston (30), which acts upon the lower valve disk, being arranged above the first working piston, **characterised in that** the first spring (22) is supported directly on the third piston (30).

2. A double seat valve according to claim 1, **characterised in that** a stop (20) limiting the stroke of the third piston (30) is provided in the cylinder (17).

3. A double seat valve according to claim 1 or 2, **characterised in that** the first spring (22) has a length determined by stops (52, 50).

4. A double seat valve according to claim 1, 2 or 3, **characterised in that** the first spring (22) is arranged holding the valve disks (6, 7) spaced apart under prestress.

5. A double seat valve according to claim 1, 2, 3 or 4, **characterised in that** the spacing of the valve disks (6, 7) is adjustable in design.

6. A double seat valve according to claim 1, 2, 3, 4 or 5, **characterised in that** an intermediate chamber is provided between drive unit and valve housing (2), in which a preferably adjustable stop (34) is arranged on the tubular shaft (14) for limiting the upward path of the upper valve disk.

7. A double seat valve according to claim 1, 2, 3, 4, 5 or 6, **characterised in that** the lower valve disk (7) is provided with a radially acting seal, which cooperates with a cylindrical seat surface (9) of the valve housing (1).

8. A double seat valve according to one or more of the preceding claims, **characterised in that** the upper valve disk (6) is designed to cooperate with a conical seat surface (8) of the valve housing (1).

9. A double seat valve according to one or more of the preceding claims, **characterised in that** the upper valve disk (6) is designed to cooperate with an axial seat surface of the valve housing (1).

10. A double seat valve according to one or more of the preceding claims, **characterised in that** the upper valve disk (6) comprises a cylindrical recess (12) for receiving the lower valve disk (7) in a sealing-tight manner.

11. A double seat valve according to one or more of the preceding claims, **characterised in that** the upper valve disk (6) comprises a surface, which is arranged so as to form a throttle gap with a counter surface of the valve housing over a partial distance of the stroke.

12. A double seat valve according to one or more of the preceding claims, **characterised in that** the lower valve disk comprises a hydraulic compensating surface (35).

13. A double seat valve according to one or more of the preceding claims, **characterised in that** a leakage line (56) is provided, which is guided through the valve housing concentric to the tubular shaft (14).

14. A double seat valve according to claim 13, **characterised in that** the concentric leakage line (56) opens out into a housing.

15. A double seat valve according to one or more of the preceding claims, **characterised in that** a stop (38) limiting the stoke of the second working piston (36) is provided on the cylinder (17) above the second working piston (36).

16. A double seat valve according to one or more of the preceding claims, **characterised in that** a spacing element (53) defining the minimal length of the second spring is provided between the first (18) and second working piston (36).

17. A double seat valve according to one or more of the preceding claims, **characterised in that** a preferably adjustable stop (50, 51, 54) for the upper third piston (30) is provided on the valve shaft (13) of the lower valve disk (7).

18. A double seat valve according to one or more of the preceding claims, **characterised in that** a stop (57) is provided for the valve shaft (13), which limits the upward path of the valve shaft (13).

19. A double seat valve according to one or more of the preceding claims, **characterised in that** a stop (31), against which the second working piston (36) strikes at the top, is provided on the tubular valve rod (14) for the drive by the second piston (36).

20. A double seat valve according to one or more of the preceding claims, **characterised in that** the first (18) and third piston (27) form a working chamber (24) with a compressed air connection (25), and the first piston (18) is arranged so as to act upon the upper valve disk (6).

## Revendications

1. Soupape à double siège comportant une protection contre les fuites, notamment pour l'industrie alimentaire et/ou les boissons, dont le boîtier comporte deux plateaux de soupape (6, 7) qui coopèrent et délimitent une chambre de fuite (10) débouchant à l'extérieur par une conduite (11) dans laquelle, pour l'actionnement des deux plateaux de soupape (6, 7), un moyen d'entraînement commun comprend un cylindre (17) recevant un premier piston (18) chargé des deux côtés par un premier et un second ressort de compression (29, 22), ce piston étant relié solidairement à la tige de piston (13) du plateau de soupape inférieur (7),
cette tige de piston (13) traverse de manière télescopique le plateau de soupape (6) supérieur et sa tige tubulaire (14) qui pénètre de son côté avec son extrémité supérieure dans le cylindre (17) et y porte un épaulement (28) pour le ressort de compression inférieur (29) qui pousse le plateau de soupape supérieur (6) dans son siège (8), avec dans le cylindre (17), sous le premier piston (18), un second piston (36) agissant sur la tige tubulaire et déplaçant celle-ci, et au-dessus du premier piston un troisième piston (30) agissant sur le plateau de soupape inférieur,
**caractérisée en ce que**
le premier ressort (22) s'appuie directement sur le troisième piston (30).

2. Soupape à double siège selon la revendication 1,
**caractérisée par**
une butée (20) dans le cylindre (17) qui limite la course du troisième piston (30).

3. Soupape selon l'une quelconque des revendications 1 ou 2,
**caractérisée en ce que**
le premier ressort (22) a une longueur fixée par les butées (52, 50).

4. Soupape selon l'une quelconque des revendications 1, 2, ou 3,
**caractérisée en ce que**
le premier ressort (22) maintient écartés sous précontrainte les plateaux de ressort (6, 7).

5. Soupape selon l'une quelconque des revendications 1 à 4,
**caractérisée en ce que**
la distance entre les plateaux de soupape (6, 7) est réglable.

6. Soupape selon l'une quelconque des revendications 1 à 5,
**caractérisée en ce qu'**
un intervalle est prévu entre l'unité d'entraînement et le boîtier de soupape (2), dans lequel se trouve une butée (34), de préférence réglable, sur la tige tubulaire (14) pour limiter la course du plateau de soupape supérieur, vers le haut.

7. Soupape selon l'une quelconque des revendications 1 à 6,
**caractérisée en ce que**
le plateau de soupape inférieur (7) est muni d'un joint à effet radial coopérant avec une surface de siège (9) cylindrique du boîtier de soupape (1).

8. Soupape selon l'une ou plusieurs des revendications précédentes,
**caractérisée en ce que**
le plateau de soupape supérieur (6) coopère avec une surface de siège (8) conique du boîtier de soupape (1).

9. Soupape selon l'une ou plusieurs des revendications précédentes,
**caractérisée en ce que**
le plateau de soupape (6), supérieur, coopère avec une surface de siège axiale du boîtier de soupape (1).

10. Soupape selon l'une ou plusieurs des revendications précédentes,
**caractérisée en ce que**
le plateau de soupape supérieur (6) comporte une cavité cylindrique (12) pour recevoir de manière étanche le plateau de soupape inférieur (7).

11. Soupape selon l'une ou plusieurs des revendications précédentes,
**caractérisée en ce que**
le plateau de soupape supérieur (6) présente une surface qui forme un intervalle d'étranglement avec une surface opposée du boîtier de soupape sur une partie de la course.

12. Soupape selon l'une ou plusieurs des revendications précédentes,
**caractérisée en ce que**
le plateau de soupape inférieur comporte une surface de compensation hydraulique (35).

13. Soupape selon l'une ou plusieurs des revendications précédentes,
**caractérisée par**
une conduite de fuite (56) concentrique à la tige tubulaire (14) et traversant le boîtier de soupape.

14. soupape selon la revendication 13,
**caractérisée en ce que**
la conduite de fuite (56), concentrique, débouche dans un boîtier.

15. Soupape selon l'une ou plusieurs des revendications précédentes,
**caractérisée en ce qu'**
au-dessus du second piston (36) le cylindre (17) comporte une butée (38) limitant la course du piston.

16. Soupape selon l'une ou plusieurs des revendications précédentes,
**caractérisée par**
un organe d'écartement (53) limitant la longueur du second ressort entre le premier (18) et le second piston (36).

17. Soupape selon l'une ou plusieurs des revendications précédentes,
**caractérisée en ce que**
la tige de soupape (13) du plateau de soupape (7) inférieur comporte une butée (50, 51, 54), de préférence réglable, pour le troisième piston supérieur (30).

18. Soupape selon l'une ou plusieurs des revendications précédentes,
**caractérisée par**
une butée (57) pour la tige de piston (13), qui limite vers le haut la course de la tige de piston (13).

19. Soupape selon l'une ou plusieurs des revendications précédentes,
**caractérisée en ce que**
la tige de piston (14) tubulaire comporte une butée (31) pour être entraînée par le second piston (36), et le second piston (36) bute vers le haut contre cette butée.

20. Soupape selon l'une ou plusieurs des revendications précédentes,
**caractérisée par**
un premier (18) et un troisième piston (27) délimitant une chambre (24) munie d'une branchement d'air comprimé (25) et le premier piston (18) agit sur le plateau de soupape (6) supérieur.
